# EUROPEAN PATENT APPLICATION

(11) **EP 2 068 191 A1**
(43) Date of publication of application: **10.06.2009**
(21) Application number: 07023789.6
(22) Date of filing: 07.12.2007
(51) Int. Cl.: G02B 27/22

(54) **Image output device capable of enlarged projection**

(71) Applicant: Choi, Kyung Gun, Sangnog-Gu, Ansan-Si, Gyeonggi-do (KR); Hahn, Kyeong Ho, Deogyang-Gu, Goyang-Si, Gyeonggi-Do (KR)
(72) Inventor: Choi, Kyung Gun, Sangnog-Gu, Ansan-Si, Gyeonggi-do (KR); Hahn, Kyeong Ho, Deogyang-Gu, Goyang-Si, Gyeonggi-Do (KR)
(74) Representative: Sparing Röhl Henseler Patentanwälte European Patent Attorneys

(57) **Abstract**

An image output device includes a housing (100) which is opened at a predetermined portion of a side wall thereof, a Fresnel lens (10) which is installed in the opened portion of the housing (100), a base which is installed inside the housing (100) to allow an object (1) to be placed thereon, illumination means (40) for illuminating the base, and a convex lens (30) which is located between the base and the Fresnel lens (10) and is installed such that an image of the object (1) placed on the base can be viewed at a position which projects out of the Fresnel lens (10). The base comprises a driving gear (22) which is rotated by a motor (23), a driven gear (21) which is rotated by rotation of the driving gear (22), and a rotation plate (20) which is rotated by rotation of the driven gear (21).

## Description

The present invention relates to an image output device for outputting the image of an object using lenses, which is capable of enlarged projection.

Lenses used in various image output devices are generally formed by grinding one surface or both surfaces of transparent materials such as glass and plastic to be curved, and are largely divided into convex lenses and concave lenses. The convex lens is made to be thicker in the center than at the edge and functions to output an enlarged image of an object.

By cutting portions of the lens surface of a convex lens on which a focus is formed and then connecting the resultant pieces, a Fresnel lens, which has a flat configuration and performs the same function as the convex lens, had been developed. The Fresnel lens is employed in televisions, lighthouses, etc.

An image output device using the Fresnel lens is located at a predetermined distance from an object so that a person can view the enlarged image of the object which is formed on the Fresnel lens. In the image output device, the distance between the object and the Fresnel lens directly influences the overall size of the image output device.

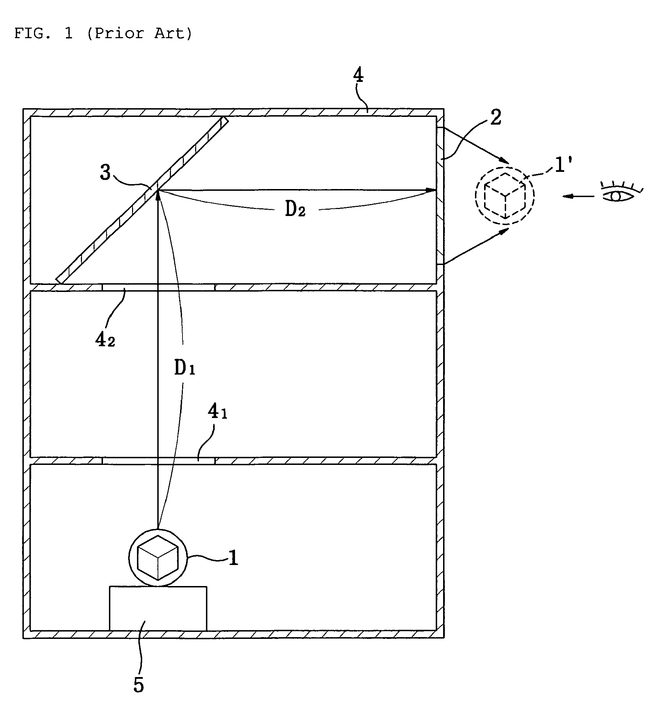

In order to miniaturize an image output device, as shown in FIG. 1, a structure has been proposed in which a reflector 3 such as a mirror is located between an object 1 and a Fresnel lens 2 so that the progressing distance D1+D2 of an image from the object 1 to the Fresnel lens 2 can be extended. In this structure, the Fresnel lens 2 is installed in the opened portion of a housing 4 which is opened on a side wall thereof, and a base 5, on which the object 1 is to be placed, is disposed in the housing 1. The reflector 3 for reflecting the image of the object 1 to the Fresnel lens 2 is located at an appropriate position in the housing 1. The housing 1 is shaped such that a space for receiving the base 5 and a space for receiving the reflector 3 are separated from each other. Grooves 4₁ and 4₂ are defined in respective separation walls which are formed between spaces for receiving the base 5 and the reflector 3 so that the progressing path for the image of the object 1 is not blocked.

The image output device using the Fresnel lens 2 has an advantage in that the size of the device can be decreased. However, since the overall progressing distance of the image of the object 1 is always constant, limitations exist in miniaturizing the device, and the image of the object 1 cannot be viewed from various angular positions.

Accordingly, the present invention has been made in an effort to solve the problems occurring in the related art, and an object of the present invention is to provide an image output device which can be miniaturized and allows the projected image of an object to be viewed from various angular positions.

In order to achieve the above object, according to one aspect of the present invention, there is provided an image output device including a housing which is opened at a predetermined portion of a side wall thereof, a Fresnel lens which is installed in the opened portion of the housing, a base which is installed inside the housing to allow an object to be placed thereon, illumination means for illuminating the base, and a convex lens which is located between the base and the Fresnel lens and is installed such that an image of the object placed on the base can be viewed at a position which projects out of the Fresnel lens, wherein the base comprises a driving gear which is rotated by a motor, a driven gear which is rotated by rotation of the driving gear, and a rotation plate which is rotated by rotation of the driven gear.

According to another aspect of the present invention, the image output device further comprises a distance sensor installed outside the housing to sense a separation distance from a viewer; lens moving means installed inside the housing to move the lens; and control means for receiving information from the distance sensor and controlling operation of the lens moving means.

According to still another aspect of the present invention, the lens moving means comprises a motor which is actuated in response to a control signal from the control means, a worm which is coupled to the motor to be rotated by the motor, and a worm wheel which is coupled to one end of a lens support plate and is meshed with the worm to be linearly moved by rotation of the worm.

According to a still further aspect of the present invention, a groove part, which has a length corresponding to that of the worm, is formed on an inner surface of the housing which is opposite to the lens moving means; and the image output device further comprises auxiliary moving means comprising at least one roller which is located in the groove part to be rotated in the same direction as a moving direction of the lens moving means and a moving plate which is coupled to the other end of the lens support plate and is placed over the roller.

The above objects, and other features and advantages of the present invention will become more apparent after a reading of the following detailed description taken in conjunction with the drawings, in which:
FIG. 1 is a cross-sectional view illustrating a conventional image output device using a Fresnel lens;
FIG. 2 is a cross-sectional view illustrating an image output device capable of enlarged projection in accordance with an embodiment of the present invention; and
FIG. 3 is a cross-sectional view illustrating an image output device capable of enlarged projection in accordance with another embodiment of the present invention.

Reference will now be made in greater detail to a preferred embodiment of the invention, an example of which is illustrated in the accompanying drawings. Wherever possible, the same reference numerals will be used throughout the drawings and the description to refer to the same or like parts.

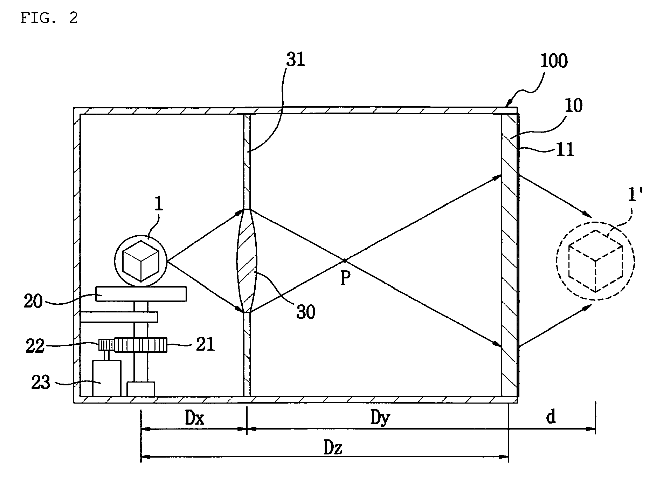

FIG. 2 is a cross-sectional view illustrating an image output device capable of enlarged projection in accordance with an embodiment of the present invention.

Referring to FIG. 2, in the image output device according to the present embodiment of the subject invention, a Fresnel lens 10 is installed in the opening of a housing 100 which is opened on a side wall thereof. A protective layer 11 made of glass, etc. is formed on the outer surface of the Fresnel lens 10 to protect the Fresnel lens 10.

A rotation plate 20, on which an object 1 is to be placed and rotated, is disposed in the housing 100 at a position opposite the Fresnel lens 10. A lens 30 is placed between the object 1 and the Fresnel lens 10. Preferably, the lens 30 comprises a convex lens.

The image of the object 1 which has passed through the lens 30 is refracted at a focal point P and is incident on the Fresnel lens 10. At this time, the output image 1' of the object 1 is outputted at a distance D_{z}+d which is farther than the actual distance D_{z} between the object 1 and the Fresnel lens 10. That is to say, as the first distance Dₓ between the object 1 and the lens 30 and the second distance D_{Y} between the lens 30 and the Fresnel lens 10 are changed, the projecting distance d of the output image 1', which projects out of the Fresnel lens 10, is changed. Also, in the present invention, since the image of the object 1 passes through the convex lens, the output image 1' is outputted in a state in which it is enlarged in comparison with the object 1.

The lens 30 is fitted into a hole which is defined in the center portion of a lens support plate 31. Due to the fact that both ends of the lens support plate 31 are coupled to the inner surface of the housing 100, the lens 30 can be stably installed with respect to the inner surface of the housing 100.

Meanwhile, below the rotation plate 20, there are disposed a driven gear 21 for rotating the rotation plate 20, a driving gear 22 meshed with the driven gear 21, and a motor 23 for rotating the driving gear 22. The actuation of the motor 23 is controlled by a controller (not shown) which is disposed outside the housing 100.

By the rotation of the rotation plate 20, the projected image can be viewed from various angular positions, other than the conventional art in which the projected image can be viewed only in one direction. In other words, not only the front face of the object 1 but also the side and rear faces of the object 1 can be viewed.

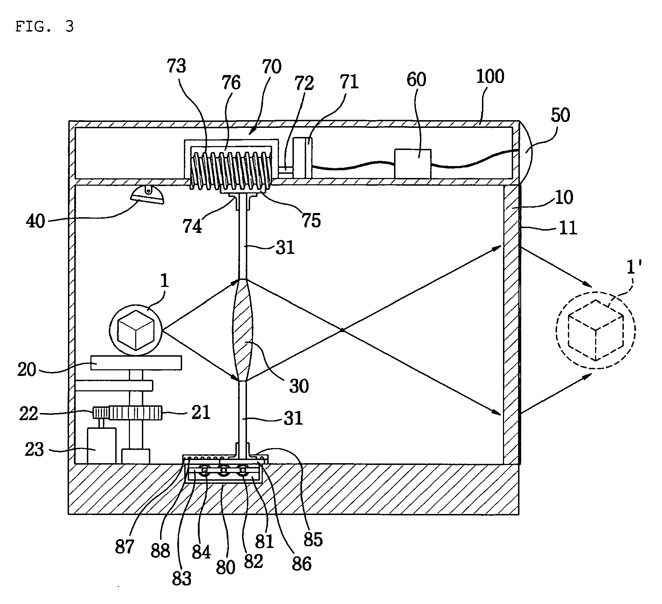

FIG. 3 is a cross-sectional view illustrating another embodiment of the present invention. The same reference numerals will be used for the same parts as those shown in FIG. 2, and the detailed description thereof will be omitted herein.

Referring to FIG. 3, the image output device according to the present embodiment of the subject invention includes a distance sensor 50 which is installed adjacent to the upper end of the side wall of the housing 100 on which the Fresnel lens 10 is installed, to sense the distance between the Fresnel lens 10 and a viewer, a control section 60, and lens moving means 70 which is installed on the upper end of the lens support plate 31 to move the lens support plate 31 and thereby change the position of the lens 30.

Illumination means 40 for illuminating the object 1 is installed inside the housing 1 of the image output device. The illumination means 40 can be installed above or under the position where the object 1 is placed. In this regard, it is preferred that the rotation plate 20, on which the object 1 is to be placed and rotated, be made of a transparent material such as glass.

The control section 60 controls the moving distance of the lens moving means 70 in response to the distance information transmitted from the distance sensor 50.

The lens moving means 70 comprises a motor 71, a worm 73 which is coupled to the motor 71 to be rotated by the motor 71, and a worm wheel 75 which is coupled to the upper end of the lens support plate 31 through a coupling member 74 and is meshed with the worm 73 to be linearly moved by the rotation of the worm 73. The worm 73 is disposed in a groove part 76 which defines a predetermined space in the housing 100. The unexplained reference numeral 72 designates a worm shaft.

Referring to FIG. 3, in the image output device according to the present embodiment, in order to ensure easy movement of the lens support plate 31, auxiliary moving means 80 can be additionally installed on the lower end of the lens support plate 31 opposite the upper end on which the lens moving means 70 is installed.

In the auxiliary moving means 80, a groove part 81, which has a length corresponding to that of the worm 73, is formed on the inner surface of the housing 100 which is opposite another inner surface of the housing on which the lens moving means 70 is disposed. At least one roller 82 is arranged in the groove part 81 to be rotated in the same direction as the moving direction of the lens moving means 70. The roller 82 is coupled to a roller support 83 by a roller pin 84. A moving plate 86, which is secured to the lens support plate 31 through a coupling member 85, is positioned over the roller 82. A guide part 87 is formed to stably support and guide the movement of the moving plate 86. A plurality of auxiliary rollers 88 are provided in the guide part 87 to ensure easy movement of the moving plate 86.

In order to move the lens 30, at least one lens moving means 70 and at least one auxiliary moving means 80 can be coupled to the lens support plate 31. For example, the leans moving means 70 can be coupled to one end of the lens support plate 31 having the shape of a quadrangular plate and the auxiliary moving means 80 can be coupled to the other end of the lens support plate 31. Alternatively, the lens moving means 70 can be coupled to one surface of the lens support plate 31, and the auxiliary moving means 80 can be coupled to the other surface of the lens support plate 31.

As is apparent from the above description, the present invention provides advantages in that an image output device can be miniaturized further.

Also, by varying the position of a lens, the projecting distance of an output image, which projects out of a Fresnel lens, can be changed and the projected image can be viewed from various angular positions.

Although preferred embodiments of the present invention have been described for illustrative purposes, those skilled in the art will appreciate that various modifications, additions and substitutions are possible, without departing from the scope and the spirit of the invention as disclosed in the accompanying claims.

## Claims

1. An image output device including a housing (100) which is opened at a predetermined portion of a side wall thereof, a Fresnel lens (10) which is installed in the opened portion of the housing (100), a base which is installed inside the housing (100) to allow an object (1) to be placed thereon, illumination means (40) for illuminating the base, and a convex lens (30) which is located between the base and the Fresnel lens (10) and is installed such that an image of the object (1) placed on the base can be viewed at a position which projects out of the Fresnel lens (10), wherein the base comprises a driving gear (22) which is rotated by a motor (23), a driven gear (21) which is rotated by rotation of the driving gear (22), and a rotation plate (20) which is rotated by rotation of the driven gear (21).

2. The image output device according to claim 1, further comprising:
a distance sensor (50) installed outside the housing (100) to sense a separation distance from a viewer;
lens moving means (70) installed inside the housing (100) to move the lens (30); and
control means for receiving information from the distance sensor (50) and controlling operation of the lens moving means (70).

3. The image output device according to claim 2, wherein the lens moving means (70) comprises a motor (71) which is actuated in response to a control signal from the control means, a worm (73) which is coupled to the motor (71) to be rotated by the motor (71), and a worm wheel (75) which is coupled to one end of a lens support plate (31) and is meshed with the worm (73) to be linearly moved by rotation of the worm (73).

4. The image output device according to claim 2 or 3, wherein a groove part (81), which has a length corresponding to that of the worm (73), is formed on an inner surface of the housing (100) which is opposite to the lens moving means (70); and wherein the image output device further comprises auxiliary moving means (80) comprising at least one roller (82) which is located in the groove part (81) to be rotated in the same direction as a moving direction of the lens moving means (70) and a moving plate (86) which is coupled to the other end of the lens support plate (31) and is placed over the roller (82).
